# EUROPÄISCHE PATENTSCHRIFT

(11) **EP 2 102 080 B1**
(45) Veröffentlichungstag und Bekanntmachung des Hinweises auf die Patenterteilung: **25.01.2012**
(21) Anmeldenummer: 07847808.8
(22) Anmeldetag: 04.12.2007
(51) Int. Cl.: B65G 1/137

(54) **VERFAHREN UND VORRICHTUNG ZUM KOMMISSIONIEREN VON WAREN, LAGERVERWALTUNGSSYSTEM UND VERWENDUNG WENIGSTENS EINES AUTARKEN TRANSPORTFAHRZEUGS**
METHOD AND DEVICE FOR THE COMMISSIONING OF GOODS, STORAGE MANAGEMENT SYSTEM, AND USE OF AT LEAST ONE SELF-SUFFICIENT TRANSPORT VEHICLE
PROCÉDÉ ET DISPOSITIF DE PRÉPARATION DE MARCHANDISES, SYSTÈME DE GESTION DES STOCKS ET UTILISATION D'AU MOINS UN VÉHICULE DE TRANSPORT AUTONOME

(30) Priorität: 07.12.2006 DE 102006057758
(43) Veröffentlichungstag der Anmeldung: 23.09.2009
(73) Patentinhaber: KUKA Roboter GmbH, 86165 Augsburg (DE)
(72) Erfinder: SCHNOOR, Bernd, 86316 Friedberg (DE)
(74) Vertreter: Patentanwälte Funk & Böss GbR
(86) Internationale Anmeldenummer: PCT/EP2007/063309
(87) Internationale Veröffentlichungsnummer: WO 2008/068264

(56) Entgegenhaltungen:
- EP-A- 1 471 015
- WO-A-2005/077789
- DE-U1- 20 203 287
- US-A- 5 934 864
- US-A- 5 953 234

## Beschreibung

Die Erfindung betrifft ein Verfahren und eine Vorrichtung zum Kommissionieren von Waren, ein Lagerverwaltungssystem und eine Verwendung wenigstens eines autarken Transportfahrzeugs.

Die vorliegende Erfindung betrifft allgemein automatisierte Warenlager oder Distributionszentren (Warenverteilzentren), die insbesondere mittels Lagerverwaltungssystemen, die im Englischen als Warehouse Management Systems bezeichnet werden, automatisiert verwaltet werden.

In automatisierten Warenlagern bzw. Warenverteilzentren werden eine Vielzahl unterschiedlichster Waren vorgehalten, die bedarfsgerecht nach Bestellerwunsch in eine maßgeschneiderte Kundenlieferung zusammengestellt d.h. kommissioniert werden.

Im Warenverteilzentrum werden in der Regel sogenannte sortenreine Paletten angeliefert und dort zwischengelagert. Die sortenreinen Paletten umfassen in der Regel mehrere Gebinde, die beispielsweise lagenweise palettiert sind. Für die Zwischenlagerung werden in der Regel sogenannte Hochregallager verwendet, die als mehrstöckige Bauwerke ausgebildet sind. In den Hochregallagern werden Regalbediengeräte verwendet, um jeweils eine komplette Palette aus dem Hochregallager herauszunehmen und einer Vereinzelungsstation zuzuführen.

Das automatische Kommissionieren, z.B. in der Getränke- oder Lebensmittel-Distribution - allgemein: von Palette zu Palette - umfasst in der Regel folgende Teilprozesse:
Depalettieren und gegebenenfalls auch Vereinzeln der Vielzahl unterschiedlicher sortenreiner Paletten.

Gemischtes Palettieren, z.B. lagenweise, stapelweise oder beliebig gemischt) nach berechnetem Packmuster.

In der Vereinzelungsstation werden die einzelnen Gebinde von den sortenreinen Paletten entnommen und einem sogenannten "Case Dispenser" zugeführt.

Der Case Dispenser kann eine Mehrzahl von parallel zueinander verlaufenden Rollenförderbahnen aufweisen oder aber auch als ein sogenanntes Automatisches Kleinteilelage (AKL) ausgebildet sein. Für jedes vereinzelte Gebinde einer bestimmten Art ist eine eigene Rollenförderbahn erforderlich oder eine entsprechend große Zahl an Gebindepufferplätzen in einem AKL, um für die Kommissionierung einzeln entnommen werden zu können.

Liegt eine Bestellung von unterschiedlichen Artikeln des Kunden, ein sogenannter Auftrag, vor, dann berechnet ein Palettieralgorithmen des Lagerverwaltungssystems im voraus eine exakte Palettierfolge bzw. ein Packmuster für die zu palettierenden Artikel. Anschließend werden die den unterschiedlichen Artikeln zugeordneten Gebinde aus den verschiedenen Rollenförderbahnen abgerufen und sequenziell einer Palettierstation zugeführt. Dabei müssen die Gebinde entsprechend der gewünschten Palettierung in der exakten Reihenfolge geordnet zugeführt werden, damit automatisiert die kundenspezifische gemischte Palette (Zielpalette) zusammengestellt werden kann.

Wegen der Notwendigkeit, für jeden Artikel eine eigene Rollenförderbahn oder aber eine entsprechend große Zahl von Gebinde-Pufferplätzen in einem Automatischen Kleinteilelager bereitzustellen und die Förderbahnen gemäß der gewünschten Palettierung in exakter Gebindefolge zu beladen, sind gewöhnliche automatisierte Warenlager relativ aufwändig und unter Umständen auch anfällig, da der Ausfall einer einzigen Rollenförderbahn zum Stillstand der gesamten Kommissionierung führen kann.

Die DE 202 03 287 U1 offenbart eine Zwischenablagevorrichtung zum automatischen Umpacken von Artikeln von einer Palette in Behälter. Die Zwischenablagevorrichtung weist eine automatische Depalettierstation, ein Kamerasystem, eine Roboterzelle mit einem Greifer und eine Paletten- und Behälterfördertechnik auf.

Die EP 1 471 015 A2 offenbart ein flexibel nutzbares Regallager mit vertikalen Trägern, die in Richtung entlang einer Regalgasse durch mehrere, übereinander angeordnete horizontale Längsträger verbunden sind.

Die WO 2005/077789 A1 offenbart ein automatisiertes Warenlager mit mehreren übereinanderliegenden Lagerflächen. Wenigstens einem der Lagerflächen ist ein fahrerloses Transportfahrzeug zugeordnet.

Die Aufgabe der vorliegenden Erfindung ist es, ein verbessertes Verfahren und eine entsprechend verbesserte Vorrichtung zum Kommissionieren von Waren anzugeben. Eine weitere Aufgabe der Erfindung ist es, ein entsprechendes Lagerverwaltungssystem anzugeben.

Die Aufgabe der Erfindung wird gelöst durch ein Verfahren zum Kommissionieren von Waren, gemäβ Anspruchs 1, aufweisend folgende Verfahrensschritte:
- Beladen wenigstens eines autarken Transportfahrzeugs mit allen zum Kommissionieren einer gemischten Palette benötigten Palettierungseinheiten,
- automatisches Fahren des mit allen zum Kommissionieren der gemischten Palette benötigten Palettierungseinheiten beladenen wenigstens einen autarken Transportfahrzeugs zu einer einen Palettierroboter aufweisenden Palettierstation und
- sequenzielles Entladen der Palettierungseinheiten von dem wenigstens einen autarken Transportfahrzeug und Platzieren der Palettierungseinheiten auf eine Transportpalette zum Bilden der gemischten Palette mittels des Palettierroboters, der den wenigstens einen beladenen autarken Transportfahrzeug entsprechend eines vorab ermittelten Packmusters der gemischten Palette entlädt.

Zweck des erfindungsgemäßen Verfahrens ist es, eine gemischte Palette, mit den Palettierugnseinheiten zu beladen. Die Palettieungseinheiten sind insbesondere einzelne Gebinde, die z.B. von sortenreinen Paletten stammen. Sortenreine Paletten sind Paletten, die mit mehreren Artikeln einer Sorte, z.B. Lebensmittel einer Sorte, bestückt sind. Palettierungseinheiten können aber auch ganze Gebindelagen oder Stapel sein.

Die gemischte Palette wird z.B. aufgrund eines Auftrags erstellt, der die Anzahl und Art der gewünschten Artikel umfasst. Aufgrund des Auftrags kann ein entsprechendes und allgemein bekanntes Rechnerprogramm das Packmuster der gemischten Palette und die entsprechende Palettierreihenfolge für die gemischte Palette berechnen, so dass z.B. der Raum der gemischten Palette möglichst gut ausgenutzt wird oder dass die gemischte Palette nicht zu Instabilitäten neigt. Aufgrund des Packmusters wird beispielsweise vorgegeben, dass relativ schwere Artikel weiter unten in der gemischten Palette angeordnet werden oder dass die gemischte Palette derart beladen wird, dass in ihrer untersten Lage zunächst sortenreine Lagen platziert werden. Auf den sortenreinen Lagen können dann gemischte Lagen mit derselben Verpackungsgröße abgelegt werden.

Aufgrund des Auftrags wird das Transportfahrzeug mit allen für die gemischte Palette benötigten Palettierungseinheiten beladen. Anstelle von mehreren autarken Transportfahrzeugen kann auch nur ein einziges autarkes Transportfahrzeug mit allen für die gemischte Palette benötigten Palettierungseinheiten beladen werden. Unter einem autarken Transportfahrzeug versteht man allgemein ein flurgebundenes Fördermittel mit eigenem Fahrantrieb, das automatisch gesteuert Kommissioniereinheiten d.h. zu einer Zielpalette gehörende Gebinde, so einsammelt, dass neben der reinen Förderung auch die für die anschließende gemischte Palettierung erforderliche Sortierung bzw. Sequenzierung in der Verbindung mit eingesetzten Robotern erfüllt ist.

Erfindungsgemäß wird demnach das relativ frei bewegliche autarke Transportfahrzeug verwendet, weshalb das erfindungsgemäße Verfahren relativ flexible ist. Das Transportfahrzeug holt sich die für die gemischte Palette bestimmten Palettierungseinheiten, wie Gebinde, ganze sortenreine Gebindelagen oder aber auch sortenreine Gebindestapel, insbesondere in beliebiger Folge ab. Die mehreren Transportfahrzeuge bzw. das Transportfahrzeug, wenn nur ein einziges verwendet wird, haben im Minimum das Fassungsvermögen, das der jeweiligen gemischten Palettenbeladung entspricht.

Das autarke Transportfahrzeug kann insbesondere ein Fahrerloses Transport System (FTS) sein. Es kann aber auch z.B. ein Gehänge einer Elektrohängebahn sein, das unabhängig von Roboterprozessen autark verfährt und als ein "Agent" Verfahrensschritte, wie z.B. den Palettierroboter triggert d.h. auslöst bzw. anstößt.

Das Transportfahrzeug kann statt aus einem einzigen auch aus zwei oder mehreren Teil-Fahreinheiten bestehen. Von Bedeutung ist, dass alle zur gemischten Palette (Zielpalette) gehörenden Palettierungseinheiten beim anschließenden gemischten Palettieren komplett und vorzugsweise gleichzeitig dem Palettierroboter zur Verfügung stehenn. Das erfindungsgemäße autarke Transportfahrzeug kann folglich jegliches autarkes Transportsystem sein. Dieses autarke Transportsystem muss nicht notweniger Weise flurgebunden sein, sondern kann zum Beispiel im Falle einer Elektrohängebahn flurunabhängig sein.

Ob die Transportfahrzeuge mit einzelnen Gebinden oder kompletten Lagen oder Stapeln von Gebinden beladen werden, hängt von dem Aussehen der gemischten Palette ab:
Beladung mit einzelnen Gebinden kann z.B. in der Lebensmittel-Distribution vorgesehen sein, vorzugsweise wenn statt A-Artikel, die so genannten Schnelldreher, beispielsweise Bund C-Artikel, die so genannten Langsamdreher, kommissioniert werden. Dann können mehrere Böden zur Ablage von bis zu ca. 100 einzelnen Gebinden für die gemischte Palette verwendet werden.

Lagenweise verpackungsrein, d.h. verschiedene Artikel mit gleicher Verpackung oder sortenreine Lagen wird z.B. in der Getränke-Distribution verwendet, wie beispielsweise so genannte Rainbow Pallets - Bulk Orders oder Display Pallets in Nordamerika.

Stapelweise verpackungs-rein, d.h. gleiche oder verschiedene Artikel mit gleicher Verpackung, z.B. nestende Getränkekisten wird z.B. in der Getränke-Distribution in Europa verwendet.

Die Palettierungseinheiten werden nach einer Ausführungsform des erfindungsgemäßen Verfahrens in Form von Gebindelagen vorgehalten, so dass die benötigten Palettierungseinheiten für das Beladen des wenigstens einen autarken Transportfahrzeugs aus den vorgehaltenen Gebindelagen entnommen werden können.

In diesem Zusammenhang können die Positionen und Orientierungen aller Einzelgebinde innerhalb dieser Lage durch geeignete Sensorik ermittelt werden. Dies erfolgt z.B. durch ein optisches Sensorsystem.

Die Gebindelagen bzw. die Palettierungseinheiten werden in einer Warenvorhaltevorrichtung gelagert. Die Warenvorhaltevorrichtung kann z.B. ein Hochregal mit mehreren, übereinanderliegenden Regalebenen sein.

Nach einer Variante des erfindungsgemäßen Verfahrens weist dieses Hochregal untere und obere Regalebenen auf, wobei die Gebindelagen in den unteren Regalebenen vorgehalten und in den oberen Regalebenen den Gebindelagen zugeordnete sortenreine Paletten oder aber auch weitere bereits vereinzelte Palettenlagen vorgehalten werden.

Wie bereits ausgeführt, werden die Artikel für das Warenlager in der Regel als sortenreine Paletten angeliefert. Für das Zusammenstellen der gemischten Palette ist es nötig, einzelne Palettierungseinheiten aus den sortenreinen Paletten zu entnehmen.

Gemäß einer Ausführungsform des erfindungsgemäßen Verfahrens werden zunächst die in den oberen Regalebenen des Hochregals vorgehaltenen sortenreinen Paletten, die jeweils mehrere Gebindelagen aufweisen, z.B. mittels einer allgemein bekannten Regalbedienvorrichtung automatisch depalettiert und die einzelnen Gebindelagen in die unteren Regalebenen einsortiert. Die in den unteren Regalebenen einsortierten Gebindelagen können dann in relativ einfacher Weise für das Beladen des wenigstens einen autarken Transportfahrzeugs verwendet werden.

Das Transportfahrzeug wird mit den nötigen Palettierungseinheiten beladen. Eine bestimmte Reihenfolge für das Beladen ist nicht notwendig, da nur das aufgrund des Packmusters vorgegebene Platzieren der Palettierungseinheiten auf der Transportpalette der gemischten Palette maßgeblich ist. Demnach kann die zurückzulegende Strecke des Transportfahrzeugs für das Einsammeln der Palettierungseinheiten möglichst kurz geplant werden. Dieses führt zu einem wegoptimierten, kontinuierlichen Verfahren entlang der Kommissioniergasse.

Sind die Palettierungseinheiten im Hochregal vorgehalten, dann befinden sich zwischen den Reihen des Hochregals Gassen, die als Kommissioniergassen bezeichnet werden. Dann ist es möglich, dass das Transportfahrzeug nur einmal eine solche Kommissioniergasse entlang fahren braucht, um mit allen benötigten Palettierungseinheiten beladen zu werden.

Nach einer bevorzugten Ausführungsform des erfindungsgemäßen Verfahrens wird das Transportfahrzeug mittels einer Beladevorrichtung beladen. Diese weist z. B. einen Vereinzelungsroboter auf, der insbesondere derart eingerichtet sein kann, dass er z.B. mittels eines Linearantriebs längs der Kommissioniergasse verfahrbar ist. Dann ist es möglich, diesen Roboter für die Entnahme der benötigten Palettierungseinheiten aus dem Hochregal entlang der Kommissioniergasse zu fahren und gleichzeitig das wenigstens eine autarke Transportfahrzeug neben diesem Roboter herfahren zu lassen.

Aufgrund der Ausgestaltung des erfindungsgemäßen Verfahrens, für dass das Hochregal mit den unteren und oberen Regalebenen verwendet wird, befinden sich im oberen Bereich des Hochregals die sortenreinen Paletten (Quellpaletten) und in Bodennähe befinden sich mehrere Lagen unterschiedlicher Produkte übereinander im Hochregal. Die einzelnen Produkte, d.h. die Palettierungseinheiten, sind daher für die automatische Beladevorrichtung relativ einfach zugänglich. Dadurch ist für das Depalettieren einzelner Gebinde - entsprechend der Kundenaufträge - die Quellendichte erheblich gesteigert. Dies kann zu relativ kurzen Zugriffszeiten für ein einzelnes Gebinde führen.

Der Vereinzelungsroboter bzw. die Beladevorrichtung kann z. B. alle erforderlichen Palettierungseinheiten insbesondere in definierter Position auf dem Transportfahrzeug ablegen. Die Positionen und Orientierungen der abgelegten Palettierungseinheiten kann gespeichert werden, was eine Entnahme der Palettierungseinheiten vom Transportfahrzeug mittels des Palettierroboters beschleunigen kann.

Das Ablegen der Palettierungseinheiten auf dem Transportfahrzeug kann z.B. auf einem Rost oder auf einer Noppenmatte erfolgen, wodurch beim späteren Entladen z.B. mit Gabelgreifern kraftschlüssig, prozess-stabil und ohne Greiferwechsel gegriffen werden kann.

Das Beladen des Transportfahrzeugs kann derart erfolgen, dass später stets von vorn greifend entladen werden kann (dies hängt jeweils vom berechneten Packmuster ab).

Ist das Transportfahrzeug beladen, dann fährt es automatisch zur Palettierstation, in der der Palettierroboter das wenigstens eine autarke Transportfahrzeug automatisch gemäß dem vorab festgelegten Packmuster der gemischte Palette entlädt und die entladenen Palettierungseinheiten auf der Transportpalette stapelt.

Damit der Palettierroboter in relativ einfacher Weise die Palettiereinheiten greifen kann, kann das wenigstens eine autarke Transportfahrzeug derart beladen werden, dass der Palettierroboter für das Entladen des wenigstens einen autarken Transportfahrzeugs die Palettierungseinheiten bevorzugt von vorne greifen kann.

Des Weiteren kann der Palettierroboter mit Sensoren ausgestattet sein, mit deren Hilfe der Palettierroboter die einzelnen Palettierungseinheiten identifizieren kann, um die gemischte Palette gemäß dem festgelegten Packmuster aufzubauen.

Gemäß einer Variante des erfindungsgemäßen Verfahrens werden die Positionen und eventuell auch die Orientierungen der Palettierungseinheiten auf dem wenigstens einen autarken Transportfahrzeug gespeichert. Dann ist es möglich, dass das beladene wenigstens eine autarke Transportfahrzeug an eine vorab festgelegte Stelle innerhalb der Palettierstation fährt und der Palettierroboter aufgrund der Position der Palettierungseinheiten auf dem wenigstens einen autarken Transportfahrzeug die für das Aufbauen der gemischten Palette gerade benötigte Palettierungseinheit ergreifen kann.

In diesem Zusammenhang wird deutlich, dass die Reihenfolge der Beladung des Transportfahrzeugs beliebig sein kann. Entscheidend ist nur die Reihenfolge des Entladens beim automatischen Palettieren der gemischten Palette. Deshalb kann ein Transportfahrzeug beim Beladen gegebenenfalls stets kontinuierlich durch die Kommissioniergasse fahren, wodurch die Verfahrwege verkürzt werden.

Da sich gegebenenfalls auch der Vereinzelungsroboter auf einer Verfahrachse entlang der Kommissioniergasse bewegen kann, bewegt sich deshalb auch das Transportfahrzeug parallel zum Vereinzelungsroboter.

In einem Warenlager, insbesondere im Lebensmittelsektor, können die verschiedenen Produkte nach "Ladenspiegel" (Family Grouping) angeordnet sein. Dies führt dazu, dass alle Produkte einer Produktfamilie auf möglichst wenigen gemischten Paletten zusammengefasst palettiert werden. Um das zu erreichen, werden die verschiedenen Produkte in den Kommissioniergassen des Warenlagers in gleicher Folge angeordnet, wie z.B. in den Gängen des Supermarktes. Deshalb ist davon auszugehen, dass in der Variante des erfindungsgemäßen Verfahrens, bei dem das Hochregal verwendet wird, mit dem Transportfahrzeug und der Lagerung der Gebindelagen in den unteren Regalebenen eine komplette Beladung des Transportfahrzeugs innerhalb einer relativ kurzen Verfahrstrecke im Kommissionierbereich abgeschlossen ist. Demnach ist es möglich, dass der Vereinzelungsroboter überwiegend im "Gebindezugriff" ist (produktive Zeit) und sich die Verfahrzeit im Vergleich zur produktiven Zeit erheblich verringert.

Wie bereits erwähnt, kann das Beladen des Transportfahrzeugs kann insbesondere in beliebiger Folge erfolgen, so dass der Gesamtvorgang des Einsammelns der Palettierungseinheiten in der Kommissioniergasse Weg-optimiert durchgeführt werden kann. Daher ist es möglich, dass das wenigstens eine autarke Transportfahrzeug stets kontinuierlich in dieselbe Richtung innerhalb der Gasse fährt und daher nacheinander alle erforderlichen Palettierungseinheiten einsammelt.

Um das wenigstens eine autarke Transportfahrzeug möglichst kompakt auszuführen, kann dieses einen regalartigen Aufbau für das Beladen mit den Palettierungseinheiten aufweisen.

Somit ersetzt das Ablegen der Palettierungseinheiten auf dem wenigstens einen Transportfahrzeug in insbesondere beliebiger Folge und das spätere Wiederherhausnehmen in - vom Palettieralgorithmus - vorgegebener Folge das Sortieren bzw. Sequenzieren der konventionellen "Case Dispenser".

Die Aufgabe der Erfindung wird auch gelöst durch eine Vorrichtung zum Kommissionieren von Waren, gemäβ Anspruchs 7, aufweisend
- eine Warenvorhaltevorrichtung, in der eine Mehrzahl unterschiedlicher Palettierungseinheiten vorgehalten werden,
- ein Lagerverwaltungssystem, das aufgrund eines Auftrags zum Kommissionieren einer eine Transportpalette aufweisenden gemischten Palette ein Packmuster für die gemischte Palette ermittelt,
- eine automatische Beladevorrichtung und wenigstens ein autarkes Transportfahrzeug, wobei die Beladevorrichtung derart eingerichtet ist, aufgrund des Auftrags alle für die gemischte Palette benötigten Palettierungseinheiten aus der Warenvorhaltevorrichtung zu entnehmen und das wenigsten eine autarke Transportfahrzeug mit den entnommenem Palettierungseinheiten zu beladen, und
- eine einen Palettierroboter aufweisende Palettierstation, wobei das wenigsten eine autarke Transportfahrzeug derart eingerichtet ist, automatisch zur Palettierstation zu fahren, nachdem das wenigsten eine autarke Transportfahrzeug mit allen für die gemischte Palette benötigten Palettierungseinheiten beladen ist, und der Palettierroboter derart eingerichtet ist, die Palettierungseinheiten von dem wenigstens einen autarken Transportfahrzeug gemäß dem

Packmuster zu entladen und gemäß dem Packmuster auf die Transportpalette zum Bilden der gemischten Palette zu platzieren.

Mit der erfindungsgemäßen Vorrichtung zum Kommissionieren von Waren kann demnach das erfindungsgemäße Verfahren zum Kommissionieren von Waren durchgeführt werden.

Die Beladevorrichtung kann z. B. einen Vereinzelungsroboter umfassen, der z.B. ein geläufiger Industrieroboter, insbesondere ein 6-Achs Knickarmroboter sein kann. Auch der Palettierroboter kann ein 6-Achs Knickarmroboter sein. Anstelle mehrerer autarker Transportfahrzeuge kann für die gemischte Palette auch genau ein autarkes Transportfahrzeug mit allen zum Kommissionieren der gemischten Palette benötigten Palettierungseinheiten verwendet werden.

Die Warenvorhaltevorrichtung kann beispielsweise Gebindelagen vorhalten und die Beladevorrichtung kann die benötigten Palettierungseinheiten für das Beladen des wenigstens einen autarken Transportfahrzeugs aus den vorgehaltenen Gebindelagen entnehmen.

Die Warenvorhaltevorrichtung kann z.B. ein Hochregal umfassen, das mehrere übereinanderliegende Regalebenen mit unteren und oberen Regalebenen aufweist. Dann ist es möglich, die Gebindelagen in den unteren Regalebenen und den Gebindelagen zugeordnete sortenreine Paletten in den oberen Regalebenen vorzuhalten. Die sortenreinen Paletten können beispielsweise mit einer Regalbedienvorrichtung depalettiert werden, sodass die Regalbedienvorrichtung die einzelnen Gebindelagen der sortenreinen Paletten in die unteren Regalebenen einsortiert.

Nach einer Ausführungsform der erfindungsgemäßen Vorrichtung weist die Regalbedienvorrichtung einen Dapalettierungskopf auf, der wenigstens einen Trageboden und zwei gegenüberliegende Walzen zum Anheben der Gebindelagen aufweist. Ein solcher Depalettierkopf ermöglicht ein relativ sicheres und zuverlässiges Anheben der in den sortenreinen Palette gestapelten Gebindelagen. Mittels der beiden Walzen können z.B. jeweils ein gegeneinander verschiebbares Tragebodenteil beispielsweise mittels Walzantriebe bewegt werden.

Die Warenvorhaltevorrichtung insbesondere in Form des Hochregals kann wenigstens eine Kommissioniergasse aufweisen, in der der Vereinzelungsroboter als Beispiel der Beladevorrichtung und das wenigstens eine autarken Transportfahrzeug für dessen Beladen mit den Palettierungseinheiten entlang verfahrbar ist. Zu diesem Zweck kann die erfindungsgemäße Vorrichtung einen Linearantrieb aufweisen, auf dem der Vereinzelungsroboter angeordnet ist, um entlang der Kommissioniergasse verfahrbar zu sein.

Die Beladevorrichtung kann das wenigstens eine autarke Transportfahrzeug derart beladen, dass der Palettierroboter für das Entladen des wenigstens einen autarken Transportfahrzeugs die Palettierungseinheiten von vorne greifen kann. Dies vereinfacht das Palettieren der gemischten Palette.

Damit der Palettierroboter die Palettierungseinheiten gemäß dem vorab festgelegten Packmuster in relativ einfacher Weise vom wenigstens einem autarken Transportfahrzeug entnehmen kann, kann ein Lagerverwaltungssystem der Vorrichtung die Positionen und gegebenenfalls die Orientierungen der Palettierungseinheiten auf dem beladenen Transportfahrzeug speichern.

Das Lagerverwaltungssystem kann dem Auftrag zugeordnete Beladungsdatensätze an das wenigstens eine autarke Transportfahrzeug übergeben, sodass das wenigstens eine autarke Transportfahrzeug eine Bewegung des Palettierroboters und/oder eine Bewegung der Beladevorrichtung anstößt. Gemäß dieser Ausführungsform der erfindungsgemäßen Vorrichtung ist es möglich, dass das wenigstens eine autarke Transportfahrzeug, nachdem es für das Beladen mit den Palettierungseinheiten abgeschickt wurde, alle weiteren Kommissionierprozesse anstoßen.

Die Aufgabe der Erfindung wird auch gelöst durch ein Lagerverwaltungsystem, gemäβ Anspruchs 12, das eingerichtet ist:
- aufgrund eines Auftrags zum Liefern von Palettierungseinheiten ein Packmuster und eine Palettierreihenfolge der Palettierungseinheiten für eine eine Transportpalette aufweisende gemischte Zielpalette zu erstellen,
- aufgrund der Palettierungseinheiten des Auftrags wenigstens ein autarkes Transportfahrzeug zu einer Warenvorhaltevorrichtung zu bewegen, in der die Palettierungseinheiten als Gebindelagen vorgehalten werden,
- eine Beladevorrichtung derart anzusteuern, dass diese die Palettierugnseinheiten aus der Warenvorhaltevorrichtung entnimmt und auf das wenigstens eine autarke Transportfahrzeug legt,
- das wenigstens eine autarke Transportfahrzeug zu einer Palettierstation zu bewegen, nachdem das wenigstens eine autarke Transportfahrzeug mit den Palettierungseinheiten beladen ist, und
- einen Palettierroboter der Palettierstation derart anzusteuern, dass dieser das wenigstens eine autarke Transportfahrzeug aufgrund der Palettierreihenfolge entlädt und die Palettierungseinheiten derart auf die Transportpalette

ablegt, dass die gemischte Palette das Packmuster aufweist.

Lagerverwaltungssysteme, die im Englischen als Warehouse Management Systems bezeichnet werden, sind softwarebasierte Systeme für die unternehmerische Verwaltung von Warenlagern oder Distributionszentren. Mit dem Lagerverwaltungsystem kann nicht nur die Lagerposition von Artikeln, wie den Palettierungseinheiten oder den Gebindelagen, in der Warenvorhaltevorrichtung verwaltet werden, sondern auch der Wareneingang, wie Bestellung, Zulieferung, usw. verwaltet werden.

Neben den reinen Lager- und Versandinformationen innerhalb eines Lagers wird in einem Lagerverwaltungssystem auch die Kommissionierung von Waren zu versandfertigen Positionen in Form der gemischten Palette realisiert.

Mit dem erfindungsgemäßen Lagerverwaltungssystem kann z.B. die erfindungsgemäße Vorrichtung zum Kommissionieren von Waren gesteuert werden.

Das erfindungsgemäße Lagerverwaltungssystem steuert die Beladevorrichtung, den Palettierroboter und das wenigstens eine autarke Transportfahrzeug aufgrund einer Bestellung von Waren, den Auftrag. Zunächst berechnet das Lagerverwaltungssystem das Packmuster und die Palettierreihenfolge der gewünschten Palettierungseinheiten für die gemischte Palette und steuert das Transportfahrzeug und die Beladevorrichtung derart an, dass die Beladevorrichtung das Transportfahrzeug mit den gewünschten Waren, d.h. Palettierungseinheiten belädt.

Um das Entladen des beladenen Transportfahrzeugs mittels des Palettierroboters zu erleichtern, ist das erfindungsgemäße

Lagerverwaltungssystem derart eingerichtete, dass es die Positionen und gegebenenfalls auch die Orientierungen der auf dem Transportfahrzeug abgelegten Palettierungseinheiten speichert. Aufgrund dieser Information kann der Palettierroboter in relativ einfacher Weise derart angesteuert werden, dass er die Transportpalette der gemischten Palette gemäß der berechneten Palettierreihenfolge aufbaut.

Die Warenvorhaltevorrichtung ist z.B. ein Hochregal mit mehreren übereinanderliegenden Regalebenen. Die unteren Regalebenen können dafür vorgesehen sein, Gebindelagen vorzuhalten, und die oberen Regalebenen können dafür vorgesehen sein, den Gebindelagen zugeordnete sortenreine Paletten oder bereits vereinzelte sortenreine Lagen vorzuhalten. Dann kann das erfindungsgemäße Lagerverwaltungssystem gemäß einer Variante derart ausgeführt sein, dass es eine Regalbedienvorrichtung des Hochregals derart ansteuert, dass dieses die in den oberen Regalebenen vorgehaltenen sortenreinen Paletten depalettiert und die einzelnen Gebindelagen der sortenreinen Paletten aufgrund des Depalettierens in die unteren Regalebenen einsortiert, und die Beladevorrichtung derart ansteuert, dass diese die Palettierugnseinheiten von den Gebindelagen entnimmt.

Die Beladevorrichtung ist z. B. ein Vereinzelungsroboter. Nach einer Ausführungsform des erfindungsgemäßen Lageverwaltungssystems ist dieses derart ausgeführt, dass es einen längs einer Kommissioniergasse zwischen dem Hochregal angeordneten Linearantrieb, auf dem der Vereinzelungsroboter befestigt ist, derart ansteuert, dass der Vereinzelungsroboter die benötigten Palettierungseinheiten aus dem Hochregal entnehmen kann, und das wenigstens eine autarke Transportfahrzeug derart ansteuert, dass es sich neben dem Vereinzelungsroboter bewegt.

Die Aufgabe der Erfindung wird auch gelöst durch eine Verwendung wenigstens eines autarken Transportfahrzeugs für eine automatisierte Beladung mit allen für das Kommissionieren einer gemischten Palette benötigten Palettierungseinheiten in beliebiger Reihenfolge und, wenn mit allen benötigten Palettierungseinheiten beladen, zum Vorhalten der Palettierungseinheiten für eine automatisierte Palettierung der gemischten Palette gemäß einer Palettierreihenfolge, gemäβ Anspruchs 15.

Aufgrund der erfindungsgemäßen Verwendung wenigstens eines autarken Transportfahrzeugs steht dieses in Verbindung mit einer automatisierten Beladung mit allen für die gemischte Palette benötigten Palettierungseinheiten in beliebiger Folge. Dadurch ist es möglich, das wenigstens eine Transportfahrzeug wegoptimiert für das Beladen zu bewegen.

Ist das wenigstens eine Transportfahrzeug mit allen Palettierungseinheiten beladen, dann wird es erfindungsgemäß dafür verwendet, alle für die gemischte Palette benötigten Palettierungseinheiten gemäß der vorab festgelegten Palettierungsreihenfolge für das automatisierte Zusammenstellen der gemischten Palette vorzuhalten. Die Palettierreihenfolge wird z.B. mittels eines dem Fachmann allgemein bekannten Palettieralgorithmus ermittelt. Die Palettierreihenfolge basiert z.B. auf einer optimierten Beladungsdichte und Beladungsstabilität.

Somit übernimmt das wenigstens eine Transportfahrzeug erfindungsgemäß nicht nur die reine Förderung der Palettierungseinheiten, sondern wird gleichzeitig auch als passives Element zur Sortierung bzw. Sequenzierung eingesetzt.

Das erfindungsgemäße Verfahren und die erfindungsgemäße Vorrichtung zum Kommissionieren von Waren bzw. das erfindungsgemäße Lagerverwaltungssystem oder die erfindungsgemäße Verwendung des wenigstens einen autarken Transportfahrzeugs können folgende Vorteile aufweisen:
Durch das gegebenenfalls Bereitstellen bereits depalettierter Lagen kann die Dichte unterschiedlicher Artikel im Zugriff eines Vereinzelungsroboters (automatisches Handhabungsgerät) erheblich gesteigert werden (Wege werden kürzer).

Durch den Einsatz des wenigstens eines autarken Transportfahrzeugs, das stets eine komplette Palettenbeladung für die gemischte Palette einsammelt und zum Palettierroboter transportiert, kann auf konventionelle fest installierte Fördertechnik im Bereich der Gebindeförderung komplett verzichtet werden.

Durch den Einsatz von autarken Transportfahrzeugen kann auf die Verwendung großer und teuerer Gebindespeicher- und Freigabemodule wie z.B. "Case Dispenser", "Order Release Module", komplett verzichtet werden. Desgleichen wird das erfindungsgemäße Lagerverwaltungssystem deutlich einfacher, weil eine normalerweise nötige aufwändige Sequenzierung nicht mehr erforderlich ist. Die Reihenfolge beim Befüllen des Transportfahrzeugs ist beliebig. Die vorgegebene Reihenfolge beim Entladen des Transportfahrzeugs stellt im Wesentlichen keine Einschränkung mehr dar.

Durch den Einsatz der Transportfahrzeuge ist das Gesamtsystem deutlich prozessstabiler d.h. fehlertoleranter und damit auch verfügbarer, denn, wenn Teilprozesse durch irgendwelche Ausfälle unterbrochen werden, so wird stets nur der Palettierprozess unterbrochen, der direkt von diesem Teilprozess abhängt. Beispiel: ein Artikel ist vorübergehend im Kommissionierbereich nicht verfügbar. Das Transportfahrzeug wird dann zunächst mit allen anderen Produkten beladen, die zu dieser gemischten Palette gehören.

Durch den Einsatz von autarken Transportfahrzeugen erfolgt die Sortierung (Sequenzierung) gemäß der Vorgaben durch den Packmustergenerator (Palettieralgorithmus) einzig durch die Entladefolge des Palettierroboters.

Durch den Einsatz von autarken Transportfahrzeugen erhält man eine relativ große Flexibilität beim Warentransport innerhalb des Kommissioniersystems bei diesem intralogistischen Konzept. Eine Artikelvielfalt stellt wenn, dann nur ein relativ kleines begrenzendes Kriterium dar. Der Materialfluss ist und bleibt relativ einfach.

Durch den Einsatz der autarken Transportfahrzeuge des erfindungsgemäßen Verfahrens können die Kosten, wie erforderliche Investitionen, im Vergleich zu konventionellen Gesamt-Systemen reduziert werden.

Durch den Einsatz der autarken Transportfahrzeugen können z.B. in der Getränke-Distribution alle Lagen oder Stapel in beliebiger Reihenfolge direkt auf dem Transportfahrzeug vom Vereinzelungsroboter zusammengestellt werden. In der Palettierstatien werden anschließend nur noch die kompletten Lagen oder Stapel in entsprechender Folge entnommen und palettiert. Dies gilt sogar für eine gemischte letzte Lage (verpackungs-unrein).

Ein Ausführungsbeispiel der Erfindung ist exemplarisch in den beigefügten schematischen Zeichnungen dargestellt. Es zeigen:
- Fig. 1: eine Seitenansicht eines Warenlagers,

- Fig. 2: eine Draufsicht des Warenlagers,
- Fig. 3: eine gemischte Palette,
- Figuren 4, 5: Flussdiagramme zur Veranschaulichung des Zusammenstellens einer gemischten Palette der Fig. 3,
- Fig. 6: ein Depalettierkopf,
- Fig. 7: ein autarkes Transportfahrzeug,
- Fig. 8: eine Palettierstation,
- Fig. 9: eine weitere gemischte Palette,
- Fig. 10: ein weiteres autarkes Transportfahrzeug,
- Fig. 11: eine weitere gemischte Palette,
- Fig. 12: ein weiteres autarkes Transportfahrzeug und
- Fig. 13: eine weitere gemischte Palette.

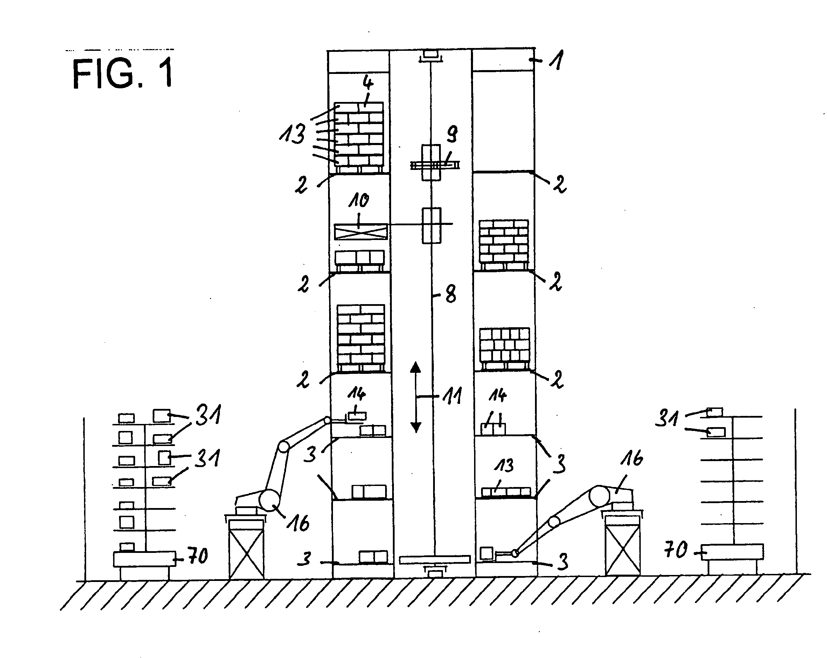

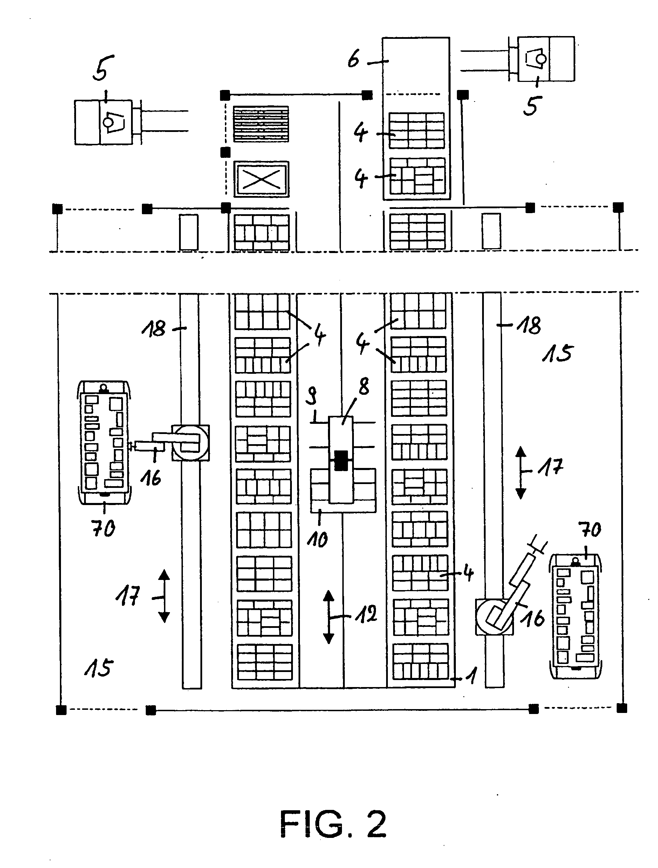

Die Fig. 1 zeigt in einer Seitenansicht ein Warenlager und die Fig. 2 zeigt das Warenlager in einer Draufsicht. Das Warenlager weist ein Hochregal 1 als Beispiel einer Warenvorhaltevorrichtung auf. Das Hochregal 1 weist mehrere zur Vorhaltung unterschiedlichster Waren vorgesehene Regalebenen 2, 3 auf.

Im Falle des vorliegenden Ausführungsbeispieles weist das Hochregal 1 drei übereinander angeordnete untere Regalebenen 3 und darüber angeordnete obere Regalebenen 2 auf. Die oberen Regalebenen 2 sind dafür vorgesehen, sortenreine Paletten 4 zu lagern. Sortenreine Paletten 4 sind Paletten mit Waren oder Produkten einer Sorte. Die individuellen Artikel oder Produkte der sortenreinen Paletten 4 sind insbesondere als übereinandergeordnete Gebindelagen 13 auf einer Tragepalette gestapelt.

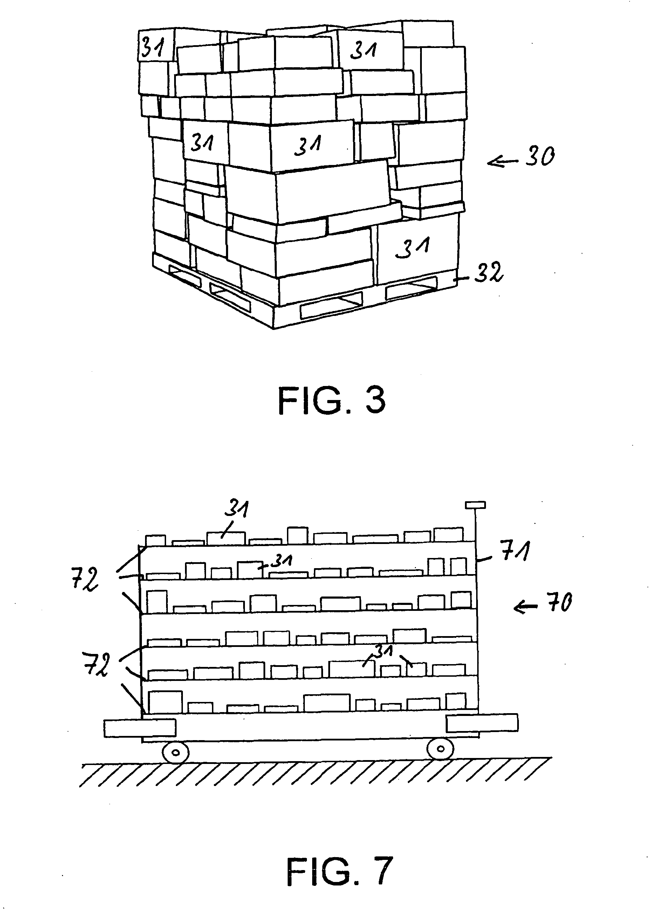

Die im Hochregal 1 vorgehaltenen Waren sind für das Zusammenstellen von gemischten Paletten vorgesehen. Die Fig. 3 zeigt ein Beispiel einer solchen gemischten Palette 30. Die in der Fig. 3 beispielhaft gezeigte gemischte Palette 30 weist mehrere unterschiedliche Produkte bzw. Waren 31 auf, die im Falle des vorliegenden Ausführungsbeispiels individuell verpackt sind und im Allgemeinen unterschiedliche Verpackungsmaße aufweisen. Gemischten Paletten wie die gemischte Palette 30 sind z.B. in der Lebensmittelindustrie üblich, sodass es sich bei den Waren 31 insbesondere um so genannte B- und C-Artikel handelt. Die Waren 31 sind auf einer Trägerpalette 32 gestapelt.

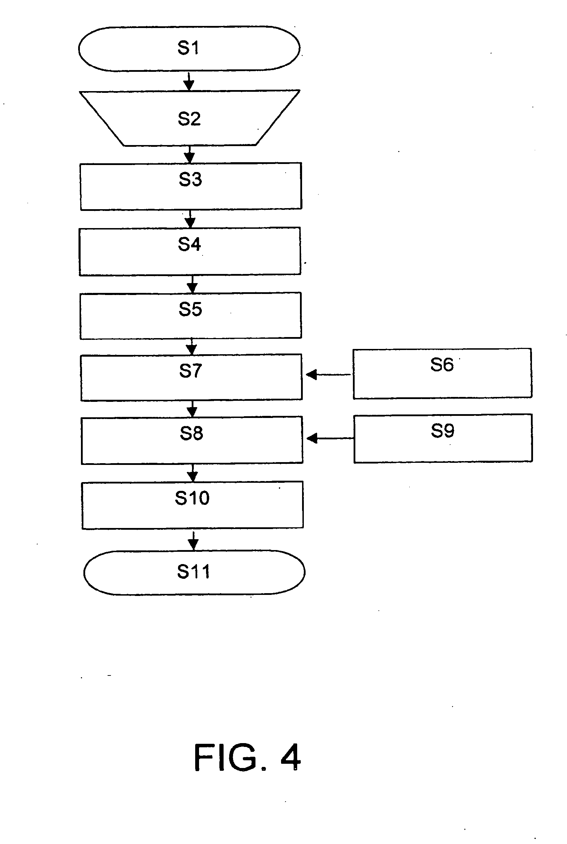

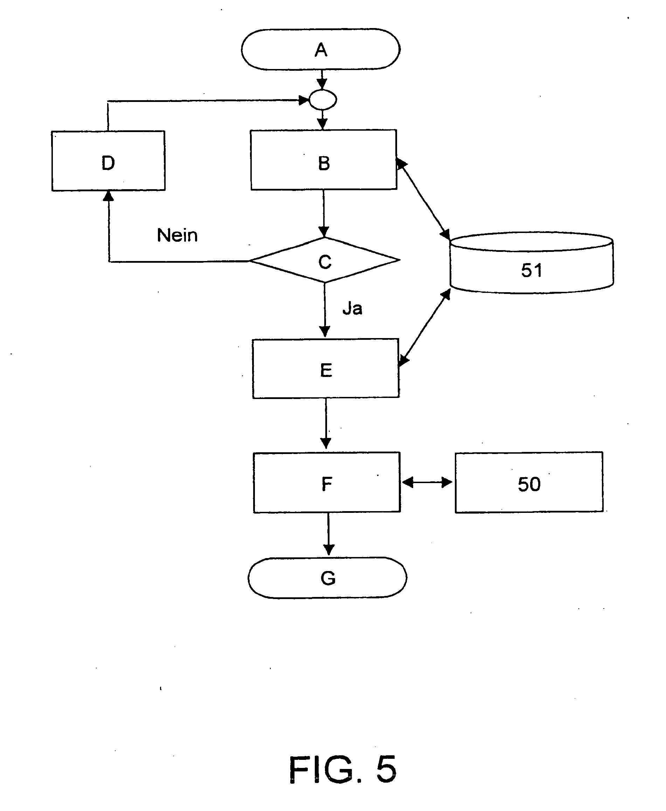

Die Figuren 4 und 5 veranschaulichen anhand von Flussdiagrammen den Prozess von der Anliefern der sortenreinen Paletten 4 bis zum Zusammenstellen gemischter Paletten, wie der gemischten Palette 30.

Zunächst werden die sortenreinen Paletten 4 an das Warenlager geliefert, Schritt S1 des Flussdiagramms der Fig. 4. Anschließend werden eventuell vorhandene Palettensicherungen, wie z. B. eine Folie, von den sortenreinen Paletten 4 manuell entfernt und mittels beispielsweise Gabelstapler 5 auf einer Rampe 6 abgestellt, Schritt S2 des Flussdiagramms der Fig. 4.

Damit die sortenreinen Paletten 4 in die oberen Regalebenen 2 des Hochregals 1 abgelegt werden können, umfasst das Hochregal 1 ein Regalbediengerät 8 mit im Falle des vorliegenden Ausführungsbeispieles einer beidseitigen Palettengabel 9 und einem Lagendepalettiergreifer 10. Das Regalbediengerät 8 wird im Falle des vorliegenden Ausführungsbeispiels von einem in der Fig. 5 gezeigten Steuerrechner 50 gesteuert, der in nicht dargestellter Weise mit dem Regalbediengerät 8 verbunden ist. Des Weiteren können die Palettengabel 9 und der Lagendepalettiergreifer 10 sowohl horizontal bezüglich eines Doppelpfeils 11 als auch vertikal bezüglich eines Doppelpfeils 12 bewegt werden.

Die Palettengabel 9 ist vorgesehen, die sortenreinen Paletten 4 von der Rampe 6 abzuholen und in die oberen Regalebenen 2 einzusortieren. Nachdem die sortenreinen Paletten 4 auf der Laderampe 6 abgestellt sind, werden Sie mittels des Regalbediengerätes 8 und insbesondere mittels der Palettengabel 9 von der Laderampe 6 abgeholt und in die oberen Regalebenen 2 einsortiert, Schritt S3 des Flussdiagramms der Fig. 4. Der genaue Ablageort der sortenreinen Paletten 4 in den oberen Regalebenen 2 wird dabei in einer Datenbank 51 des Steuerrechners 50 abgelegt. In der Datenbank 51 ist demnach eine Information über den aktuellen Lagerbestand des Warenlagers hinterlegt.

Im Falle des vorliegenden Ausführungsbeispieles ist es vorgesehen, die einzelnen Gebindelagen 13 der sortenreinen Paletten 4 mit dem Regalbediengerät 8 und speziell mit dem Lagendepalettiergreifer 10 zu depalettieren und einzelne Gebindelagen 13 in die unteren Regalebenen 3 einzusortieren, Schritt S4 des Flussdiagramms der Fig. 4. Dieser Prozess wird im Falle des vorliegenden Ausführungsbeispieles ebenfalls vom Steuerrechner 50 gesteuert.

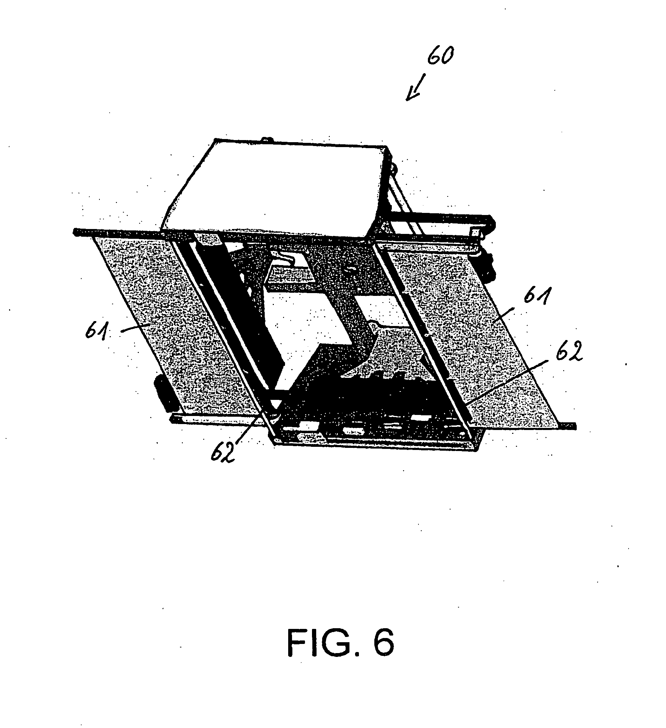

Der Lagendepalettiergreifer 10 weist im Falle des vorliegenden Ausführungsbeispiels einen in der Fig. 6 näher dargestellten Depalettierkopf 60 auf, mit dem die einzelnen Gebindelagen 13 der sortenreinen Paletten 4 entnommen und in die unteren Regalebenen 3 einsortiert werden können.

Der Depalettierkopf 60 umfasst im Falle des vorliegenden Ausführungsbeispieles Walzen 62 und mittels der Walzen 62 gegeneinander verschiebbare Teilböden 61, mittels derer einzelne Gebindelagen 13 von den sortenreinen Paletten 4 entnommen und in die unteren Regalböden 3 einsortiert werden können. Um die gewünschten Gebindelagen 13 besser zu erkennen, umfasst ferner im Falle des vorliegenden Ausführungsbeispieles der Lagendepalettiergreifer 10 eine in den Figuren nicht näher dargestellte Bilderkennung.

Im Falle des vorliegenden Ausführungsbeispieles ist es noch vorgesehen, die einzelnen in den unteren Regalebenen 3 abgelegten Gebindelagen 13 zu scannen und ggf. Zwischenlagen zu entfernen, Schritt S5 der Fig. 4.

Wie bereits ausgeführt, ist das Warenlager dafür vorgesehen, aufgrund einer Bestellung oder eines Auftrages gemischte Paletten, wie die in der Fig. 3 dargestellte gemischte Palette 30, herzustellen. Aufgrund eines solchen Auftrags A, der die Menge und Art gewünschter Waren bzw. Artikel umfasst, wird zunächst in einem Schritt B, siehe Flussdiagramm der Fig. 5, überprüft, ob die gewünschten Waren in ausreichender Menge im Warenlager vorhanden sind. Diese Überprüfung basiert auf einem Abgleich mit dem in der Datenbank 51 gespeicherten aktuellen Lagerbestand.

Ergibt die Überprüfung, dass nicht genügend Artikel bzw. Waren verfügbar sind, Schritt C, dann wird im Falle des vorliegenden Ausführungsbeispieles entsprechende weitere sortenreine Paletten 4 bestellt, Schritt D des Flussdiagramms der Fig. 5.

Sind genügend Waren bzw. Artikel verfügbar, Schritt C, dann berechnet ein auf dem Steuerrechner 50 laufendes und allgemein bekanntes Rechnerprogramm in einem Schritt E ein Packmuster für ein dem Auftrag A zugeordnete gemischte Palette, die im Falle des vorliegenden Ausführungsbeispiels die gemischten Palette 30 ist. Aufgrund des Packmusters ergibt sich eine Palettierreihenfolge zum Ablegen der einzelnen Waren 31 auf die Transportpalette 32, damit die gemischte Palette 30 das gewünschte Packmuster aufweist. Dieses Rechnerprogramm rechnet das Packmuster aufgrund von Informationen über die Höhe, Länge, Breite, Gewicht, usw. der für die gemischte Palette 30 benötigten Waren 31. Diese Information ist im Falle des vorliegenden Ausführungsbeispieles ebenfalls in der Datenbank 51 gespeichert.

Nachdem der Steuerrechner 50 bzw. das auf dem Steuerrechner 50 laufende Rechnerprogramm das Packmuster und die Palettierreihenfolge der gemischten Palette 30 berechnet hat, ordnet dieser dem Auftrag A autarke Transportfahrzeug 70 zu, Schritt F des Flussdiagramms der Fig. 5. Diese Zuordnung erfolgt im Falle des vorliegenden Ausführungsbeispieles nach dem Prinzip der schnellsten Verfügbarkeit der Transportfahrzeuge 70 und weiteren in den Figuren nicht näher dargestellten autarken Transportfahrzeugen.

Autarke Transportfahrzeuge, wie die Transportfahrzeuge 70 sind im Allgemeinen flurgebundene oder flurungebunde Fördermittel mit einem eigenen Antrieb, z.B. ein Fahrzeug eines fahrerlosen Transportsystems oder ein Fahrzeug einer Elektrohängebahn, die automatisch gesteuert und berührungslos geführt werden.

Jedes der autarken Transportfahrzeuge 70, von denen eines in der Fig. 70 näher dargestellt ist, umfasst einen regalartigen Aufbau 71 mit mehreren übereinander angeordneten Regalebenen 72, auf denen die für die gemischte Palette 30 bestimmten Waren 31 abgelegt werden sollen.

Nach der Zuordnung der Transportfahrzeuge 70 zur gemischten Palette 30 bewegen sich die Transportfahrzeug 70 automatisch zum Anfang einer Kommissioniergasse 15, die entlang des Hochregals 1 verläuft.

Dort angekommen, triggern im Falle des vorliegenden Ausführungsbeispiels die Transportfahrzeug 70 jeweils einen Industrieroboter 16 als Beispiel einer automatischen Beladevorrichtung, Schritt S6 des Flussdiagramms der Fig. 4.

Im Falle des vorliegenden Ausführungsbeispieles handelt es sich bei den Industrierobotern 16 um allgemein bekannte 6-Achs Knickarmroboter, die jeweils mittels eines Linearantriebes 18 entlang der Kommissioniergasse 15 bezüglich Doppelpfeile 17 verfahrbar sind. Die Linearantriebe 18 sind derart im Warenlager angeordnet, dass die entsprechenden Industrieroboter 16 bezüglich der Doppelpfeile 17 neben dem Hochregal 1 entlang fahren können, um einzelne Gebindelagen 13 oder einzelne Gebinde 14 der Gebindelagen 13 aus den unteren Regalebenen 3 zu entnehmen.

Im Falle des vorliegenden Ausführungsbeispieles bewegen sich die Industrieroboter 16 auf ihren Linearantrieben 18 entlang der Kommissioniergasse 15 und die Transportfahrzeug 70 fahren automatisch neben den Industrierobotern 16 entlang der Kommissioniergasse 15. Während ihrer Bewegungen entlang der Kommissioniergassen 15 entnehmen im Falle des vorliegenden Ausführungsbeispiels die Industrieroboter 16 einzelne Gebinde 14, die den Waren 31 für die gemischte Palette 30 entsprechen, und legen die entnommenen Gebinde 14 auf den Transportfahrzeugen 70 ab. Des Weiteren werden im Falle des vorliegenden Ausführungsbeispiels die Positionen und Orientierungen der auf den Transportfahrzeugen 70 als Waren 31 abgelegten Gebinde 14 z.B. im Steuerrechner 50 gespeichert.

Sind die Transportfahrzeuge 70 am Ende der Kommissioniergasse 15 angekommen, so sind sie im Falle des vorliegenden Ausführungsbeispiels mit allen für die gemischte Palette 30 benötigten Waren 31 beladen, Schritt S7 des Flussdiagramms der Fig. 4.

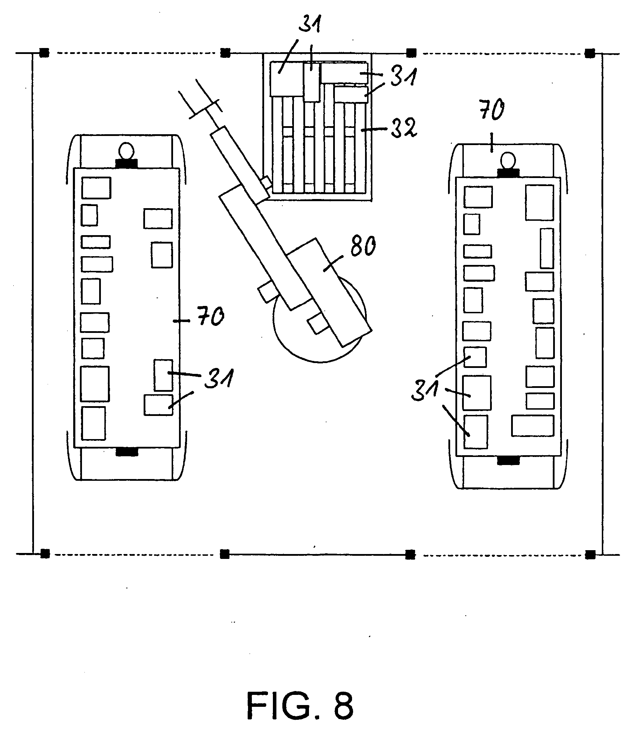

Sind die Transportfahrzeuge 70 mit allen für die gemischte Palette 30 benötigten Waren 31 beladen, dann fahren die Transportfahrzeuge 70 automatisch zu einer in der Fig. 8 dargestellten Palettierstation und stoppen jeweils an einer vorher festgelegten Position. Die Palettierstation umfasst im Wesentlichen einen Palettierroboter 80, der im Falle des vorliegenden Ausführungsbeispieles ein 6-Achs Knickarmroboter ist.

Erreichen die Transportfahrzeuge 70 die Palettierstation, dann triggern sie in einem Schritt S9 des Flussdiagramms der Fig. 4 den Palettierroboter 80, der daraufhin automatisch die beiden Transportfahrzeuge 70 gemäß der vorab festgelegten Palettierreihenfolge entlädt und die Waren 31 auf die Transportpalette 32 abstellt, um die gemischten Palette 30 aufzubauen, Schritt S8 des Flussdiagramms der Fig. 4.

Im Falle des vorliegenden Ausführungsbeispieles sind die Positionen und Orientierungen der einzelnen als Waren 31 auf den Transportfahrzeugen 70 abgelegten Gebinde 14 gespeichert. Außerdem sind die beiden Transportfahrzeuge 70 mit allen für die gemischte Palette 30 benötigten Waren 31 beladen und das Packmuster für die gemischte Palette 30 ist bekannt. Demnach kann der Palettierroboter 80 automatisch die einzelnen Waren 31 von den Transportfahrzeugen 70 in der gewünschten Palettierreihenfolge entnehmen und die gemischte Palette 30 mit dem berechneten Packmuster aufbauen.

Nachdem die Trägerpalette 32 mit den Waren 31 beladen ist, wird im Falle des vorliegenden Ausführungsbeispieles die gemischte Palette 30 beispielsweise mit einer Stretchfolie gesichert, Schritt S10 des Flussdiagramms der Fig. 4 und steht für die Abholung durch den Kunden bereit, Schritt S11 des Flussdiagramms der Fig. 4 und Schritt G des Flussdiagramms der Fig. 5.

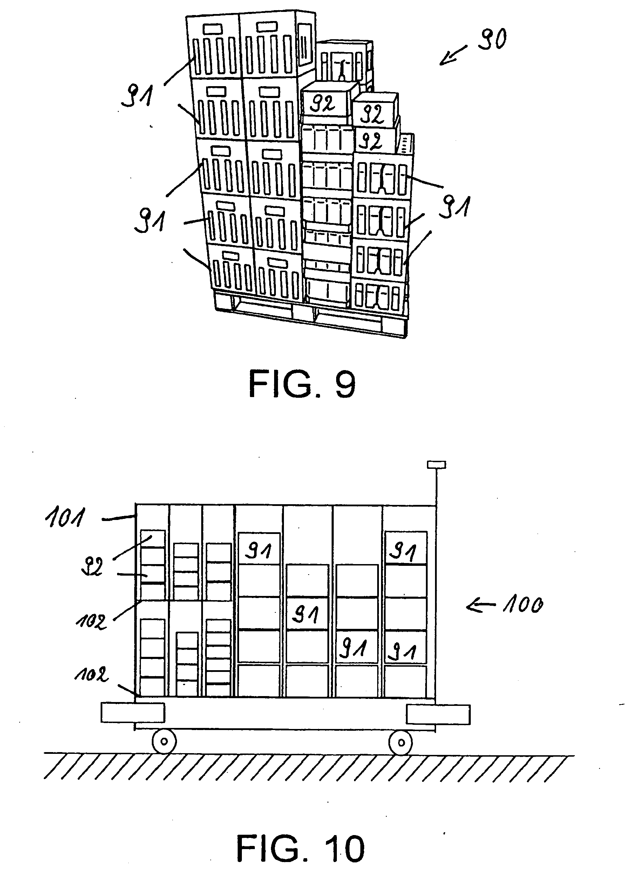

Die Fig. 9 zeigt eine weitere gemischte Palette 90, die aufgrund eines Auftrags zusammengestellt wurde. Im Gegensatz zur gemischten Palette 30 sind einige der Waren der gemischten Palette 90 stapelweise auf einer Transportpalette 32 gestapelt. Die gestapelten Waren sind mit dem Bezugszeichen 91 gekennzeichnet und sind z.B. Getränkekisten oder Getränkekartons. Zusätzlich weist die gemischte Palette 91 im Falle des vorliegenden Ausführungsbeispiels nestende Kisten 92 auf.

Für die Zusammenstellung der gemischten Palette 90 werden im Falle des vorliegenden Ausführungsbeispiels in der Fig. 10 gezeigte autarke Transportfahrzeuge 100 verwendet, die ebenfalls einen regalartigen Aufbau 101 mit mehreren Regalebenen 102 aufweisen. Der regalartige Aufbau 101 der Transportfahrzeuge 100 ist jedoch derart ausgeführt, dass die Waren 91 gestapelt auf dem Transportfahrzeug 100 mittels der Industrieroboter 16 abgeladen werden können.

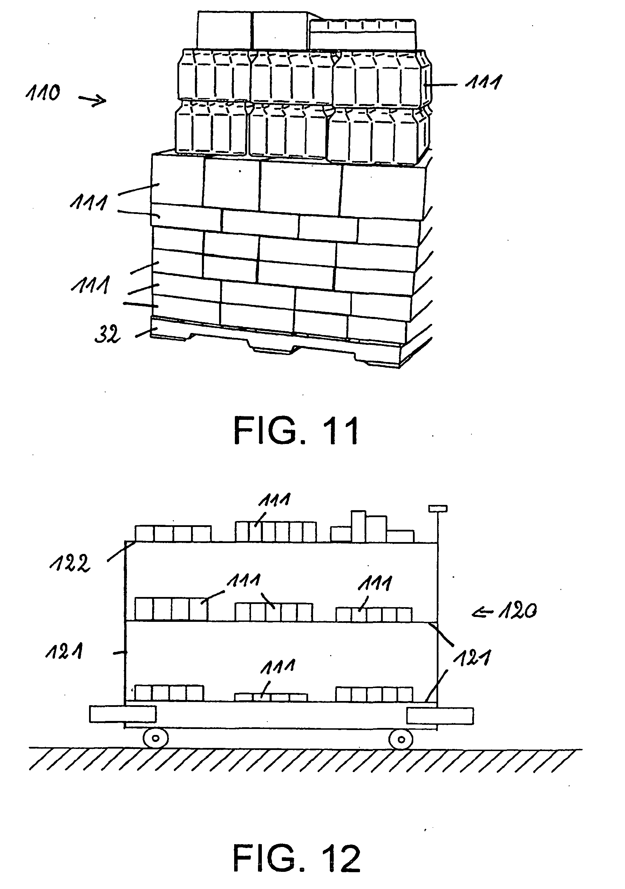

Die Fig. 11 zeigt ein weiteres Beispiel einer gemischten Palette 110, die mehrere übereinander angeordnete Lagen 111 von Waren aufweist. Die einzelnen Lagen 111 können unterschiedliche Produkte aufweisen, haben aber pro Lage 111 die gleichen Verpackungen bzw. die gleichen Verpackungsmaße und insbesondere die gleiche Höhe. Gemischte Paletten 110 kommen als so genannte "Bulk Order" insbesondere in Nordamerika vor.

Die Fig. 12 zeigt ein weiteres autarkes Transportfahrzeug 120, auf dem die für die gemischte Palette 110 bestimmten Waren zumindest teilweise lagenweise abgelegt sind. Das Transportfahrzeug 120 weist im Falle des vorliegenden Ausführungsbeispiels ebenfalls einen regalartigen Aufbau 121 mit mehreren Regalebenen 122 auf.

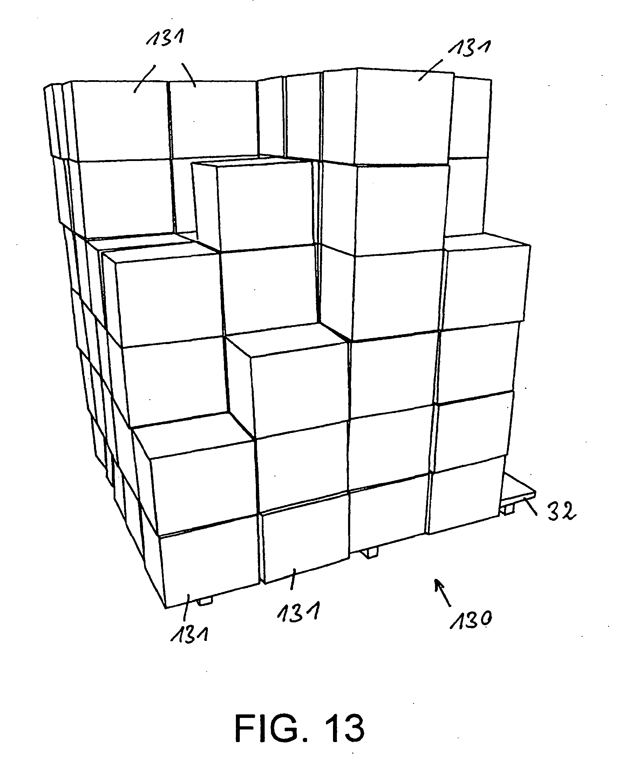

Die Fig. 13 zeigt ein weiteres Beispiel einer gemischten Palette 130, die mehrere sortenreine Stapel 131 mit mehreren übereinander gestapelten Gebinden aufweist. Solche gemischten Paletten 131 sind insbesondere in Nordamerika üblich.

Im beschriebenen Ausführungsbeispiel werden alle für die gemischten Paletten 30, 90, 110, 130 benötigten Waren mit mehreren Transportfahrzeugen an die Palettierstation gebracht. Dies ist nicht unbedingt notwendig; es kann auch genau ein autarkes Transportfahrzeug, das mit allen für die gemischte Palette notwendigen Waren beladen ist, eingesetzt werden.

## Patentansprüche

1. Verfahren zum Kommissionieren von Waren, aufweisend folgende Verfahrensschritte:
- Beladen wenigstens eines autarken Transportfahrzeugs (70, 100, 120) mit allen zum Kommissionieren einer gemischten Palette (30, 90, 110, 130) benötigten Palettierungseinheiten (31, 91, 111, 131),
- automatisches Fahren des mit allen zum Kommissionieren der gemischten Palette (30, 100, 120) benötigten Palettierungseinheiten (31, 91, 111, 131) beladenen wenigstens einen autarken Transportfahrzeugs (70, 100, 120) zu einer einen Palettierroboter (80) aufweisenden Palettierstation und
- sequenzielles Entladen der Palettierungseinheiten (31, 91, 111, 131) von dem wenigstens einen autarken Transportfahrzeug (70, 100, 120) und Platzieren der Palettierungseinheiten (31, 91, 111, 131) auf eine Transportpalette (32) zum Bilden der gemischten Palette (30, 90, 110, 130) mittels des Palettierroboters (80), der das wenigstens eine beladene autarke Transportfahrzeug (70, 100, 120) entsprechend eines vorab ermittelten Packmusters der gemischten Palette (30, 90, 110, 130) entlädt.

2. Verfahren nach Anspruch 1, aufweisend Beladen eines einzigen autarken Transportfahrzeugs (70, 100, 120) mit allen zum Kommissionieren der gemischten Palette (30, 90, 110, 130) benötigten Palettierungseinheiten (31, 91, 111, 131).

3. Verfahren nach Anspruch 1 oder 2, aufweisend Vorhalten von Gebindelagen (13) und Entnehmen der benötigten Palettierungseinheiten (31, 91, 111, 131) aus den vorgehaltenen Gebindelagen, insbesondere mit Vorhalten der Gebindelagen (13) in einem Hochregal (1), das mehrere übereinanderliegende Regalebenen (2, 3) mit unteren und oberen Regalebenen (2, 3) aufweist, wobei in den unteren Regalebenen (2) die Gebindelagen (13) und in den oberen Regalebenen (2) den Gebindelagen (13) zugeordnete sortenreine Paletten (4) vorgehalten werden, insbesondere ferner aufweisend:
- Depalettieren der in den oberen Regalebenen (2) vorgehaltenen sortenreinen Paletten (4), die jeweils mehrere Gebindelagen (13) aufweisen, und
- Einsortieren der einzelnen Gebindelagen (13) in die unteren Regalebenen (3).

4. Verfahren nach einem der Ansprüche 1 bis 3, ferner aufweisend Beladen des wenigstens einen autarken Transportfahrzeugs (70, 100, 120) mittels einer automatischen Beladevorrichtung (16).

5. Verfahren nach Anspruch 4, bei der die automatische Beladevorrichtung einen Vereinzelungsroboter (16) aufweist.

6. Verfahren nach Anspruch 5, aufweisend Verfahren des Vereinzelungsroboters (16) und des wenigstens einen autarken Transportfahrzeugs (70, 100, 120) für dessen Beladen mit den Palettierungseinheiten (31, 91, 111, 131) entlang einer Kommissioniergasse (15), entlang derer die Paltettierungseinheiten (31, 91, 111, 131) gelagert sind.

7. Vorrichtung zum Kommissionieren von Waren, aufweisend
- eine Warenvorhaltevorrichtung (1), in der eine Mehrzahl unterschiedlicher Palettierungseinheiten (31, 91, 111, 131) vorgehalten werden,
- ein Lagerverwaltungssystem, das aufgrund eines Auftrags (A) zum Kommissionieren einer eine Transportpalette (32) aufweisenden gemischten Palette (30, 90, 110, 130) ein Packmuster für die gemischte Palette (30, 90, 110, 130) ermittelt,
- eine automatische Beladevorrichtung (16) und wenigstens ein autarkes Transportfahrzeug (70, 100, 120), wobei die Beladevorrichtung (16) derart eingerichtet ist, aufgrund des Auftrags (A) alle für die gemischte Palette (30, 90, 110, 130) benötigten Palettierungseinheiten (31, 91, 111, 131) aus der Warenvorhaltevorrichtung (1) zu entnehmen und das wenigsten eine autarkes Transportfahrzeug (70, 100, 120) mit den entnommenem Palettierungseinheiten (31, 91, 111, 131) zu beladen, und
- eine einen Palettierroboter (80) aufweisende Palettierstation, wobei das wenigsten eine autarke Transportfahrzeug (79, 100, 120) derart eingerichtet ist, automatisch zur Palettierstation zu fahren, nachdem das wenigsten eine autarke Transportfahrzeug (70, 100, 120) mit allen für die gemischte Palette (30, 90, 110, 130) benötigten Palettierungseinheiten (31, 91, 111, 131) beladen ist, und der Palettierroboter (80) derart eingerichtet ist, die Palettierungseinheiten (31, 91, 111, 131) von dem wenigstens einen autarken Transportfahrzeug (30, 100, 120) gemäß dem Packmuster zu entladen und gemäß dem Packmuster auf die Transportpalette (32) zum Bilden der gemischten Palette (30, 90, 110, 130) zu plazieren.

8. Vorrichtung nach Anspruch 7, dessen Beladevorrichtung einen Vereinzelungsroboter (16) aufweist.

9. Vorrichtung nach Anspruch 1 oder 8, dessen Warenvorhaltevorrichtung (1) wenigstens eine Kommissioniergasse (15) aufweist, in der die Beladevorrichtung (16) und das wenigstens einen autarken Transportfahrzeugs (70, 100, 120) für dessen Beladen mit den Palettierungseinheiten (31, 91, 111, 131) entlang verfahrbar ist.

10. Vorrichtung nach einem der Ansprüche 7 bis 9, dessen Lagerverwaltungssystem die Positionen und Orientierungen der im wenigstens einen autarken Transportfahrzeug (71, 101, 121) Palettierungseinheiten (31, 91, 111, 131) speichert.

11. Vorrichtung nach einem der Ansprüche 7 bis 10, dessen Lagerverwaltungssystem dem Auftrag (A) zugeordnete Beladungsdatensätze an das wenigstens eine autarke Transportfahrzeug (70, 100, 120) übergibt, sodass das wenigstens eine autarke Transportfahrzeug (70, 100, 120) eine Bewegung des Palettierroboters (80) und/oder eine Bewegung der Beladevorrichtung (16) anstößt.

12. Lagerverwaltungssystem, das eingerichtet ist:
- aufgrund eines Auftrags (A) zum Liefern von Palettierungseinheiten (31, 91, 111, 131) ein Packmuster und eine Palettierreihenfolge der Palettierungseinheiten (31, 91, 111, 131) für eine eine Transportpalette (32) aufweisende gemischte Palette (30, 90, 110, 130) zu erstellen,
- aufgrund der Palietterungseinheiten (31, 91, 111, 131) des Auftrags (A) wenigstens ein autarkes Transportfahrzeug (70, 100, 120) zu einer Warenvorhaltevorrichtung (1) zu bewegen, in der die Palettierungseinheiten (31, 91, 111, 131) als Gebindelagen (13) vorgehalten werden,
- eine Beladevorrichtung (16) derart anzusteuern, dass diese die Palettierugnseinheiten (31, 91, 111, 131) aus der Warenvorhaltevorrichtung (1) entnimmt und auf das wenigstens eine autarke Transportfahrzeug (70, 100, 120) legt,
- das wenigstens eine autarke Transportfahrzeug (70, 100, 120) zu einer Palettierungsstation zu bewegen, nachdem das wenigstens eine autarke Transportfahrzeug (70, 100, 120) mit den Palettierungseinheiten (31, 91, 111, 131) beladen ist, und
- einen Palettierroboter (80) des Palettierungsstation derart anzusteuern, dass dieser das wenigstens eine autarke Transportfahrzeug (70, 100, 120) aufgrund der Palettierreihenfolge entlädt und die Palettierungseinheiten (31, 91, 111, 131) derart auf die Tränsportpalette (32) ablegt, dass die gemischte Palette (30, 90, 100, 130) das Packmuster aufweist.

13. Lagerverwaltungssystem nach Anspruch 12, bei dem die Warenvorhaltevorrichtung ein Hochregal (1) umfasst, das mehrere übereinanderliegende Regalebenen (2, 3) mit unteren und oberen Regalebenen (2, 3) aufweist, wobei Gebindelagen (13) in den unteren Regalebenen (3) vorgehalten und in den oberen Regalebenen (2) den Gebindelagen (13) zugeordnete sortenreine Paletten (4) vorgehalten werden, und das Lagerverwaltungssystem derart eingerichtet ist,
- eine Regalbedienvorrichtung (8) des Hochregals (2) anzusteuern, die in den oberen Regalebenen (2) vorgehaltenen sortenreinen Paletten (4), die jeweils die mehrere Gebindelagen (13) aufweisen, zu depalettieren, und die einzelnen Gebindelagen (13) aufgrund des Depalettierens in die unteren Regalebenen (3) einzusortieren, und
- die Beladevorrichtung (6) derart anzusteuern, die Palettierugnseinheiten (31, 91, 111, 131) von den Gebindelagen (13) zu entnehmen.

14. Lageverwaltungssystem nach Anspruch 12 oder 13, bei dem die Beladevorrichtung einen Vereinzelungsroboter (16) aufweist und das Lageverwaltungssystem derart eingerichtet ist:
- einen längs einer Kommissioniergasse (15) zwischen dem Hochregal (1) angeordneten Linearantrieb (18), auf dem der Vereinzelungsroboter (16) befestigt ist, derart anzusteuern, dass der Vereinzelungsroboter (16) die benötigten Palettierungseinheiten (31, 91, 111, 131) aus dem Hochregal (1) entnehmen kann, und
- das wenigstens eine autarke Transportfahrzeug (70, 100, 130) derart anzusteuern, dass es sich neben dem Vereinzelungsroboter (16) bewegt.

15. Verwendung wenigstens eines autarken Transportfahrzeugs (70, 100, 120) für eine automatisierte Beladung mit allen für das Kommissionieren einer gemischten Palette (30, 90, 110, 130) benötigten Palettierungseinheiten (31, 91, 111, 131) in beliebiger Reihenfolge und, wenn mit allen benötigten Palettierungseinheiten (31, 91, 111, 131) beladen, zum Vorhalten der Palettierungseinheiten (31, 91, 111, 131) für eine automatisierte Palettierung der gemischten Palette (30, 90, 110, 130) gemäß einer Palettierreihenfolge.

## Claims

1. Method for the commissioning of goods, comprising the following method steps:
- loading at least one self-sufficient transport vehicle (70, 100, 120) with all of the palletising units (31, 91, 111, 131) required for commissioning a mixed pallet (30, 90, 110, 130),
- automatically driving the at least one self-sufficient transport vehicle (70, 100, 120) to a palletising station comprising a palletising robot (80) which transport vehicle is loaded with all of the palletising units (31, 91, 111, 131) required for commissioning the mixed pallet (30, 100, 120) and
- sequentially unloading the palletising units (31, 91, 111, 131) from the at least one self-sufficient transport vehicle (70, 100, 120) and placing the palletising units (31, 91, 111, 131) onto a transport pallet (32) to form the mixed pallet (30, 90, 110, 130) by means of the palletising robot (80), which unloads the at least one loaded self-sufficient transport vehicle (70, 100, 120) according to a previously determined packing pattern of the mixed pallet (30, 90, 110, 130).

2. Method according to claim 1, comprising loading a single self-sufficient transport vehicle (70, 100, 120) with all of the palletising units (31, 91, 111, 131) required for commissioning the mixed pallet (30, 90, 110, 130).

3. Method according to claim 1 or 2, comprising holding out package layers (13) and removing the required palletising units (31, 91, 111, 131) from the held out package layers, in particular holding out the package layers (13) in a high shelf (1), which comprises a plurality of shelf levels (2, 3) lying above one another with lower and upper shelf levels (2, 3), wherein in the lower shelf levels (2) the package layers (13) are held out and in the upper shelf levels (2) homogenous pallets (4) assigned to the package layers (13) are held out, in particular also comprising:
- depalletising the homogenous pallets (4) held out in the upper shelf levels (2), which comprise several package layers (13) respectively, and
- sorting the individual package layers (13) into the lower shelf levels (3).

4. Method according to one of claims 1 to 3, further comprising loading the at least one self-sufficient transport vehicle (70, 100, 120) by means of an automatic loading device (16).

5. Method according to claim 4, in which the automatic loading device comprises a separating robot (16).

6. Method according to claim 5, comprising moving the separating robot (16) and the at least one self-sufficient transport vehicle (70, 100, 120) for loading it with the palletising units (31, 91, 111, 131) along a commissioning alley (15), along which the palletising units (31, 91, 111, 131) are stored.

7. Device for commissioning goods comprising
- a goods holding out device (1), in which a plurality of different palletising units (31, 91, 111, 131) are held out,
- a storage management system which, on the basis of an order (A) for commissioning a mixed pallet (30, 90, 110, 130) comprising a transport pallet (32), determines a packing pattern for the mixed pallet (30, 90, 110, 130),
- an automatic loading device (16) and at least one self-sufficient transport vehicle (70, 100, 120), wherein the loading device (16) is set up to remove on the basis of the order (A) all of the palletising units (31, 91, 110, 130) required for the mixed pallet (30, 90, 110, 130) from the goods holding out device (1) and to load the at least one self-sufficient transport vehicle (70, 100, 120) with the removed palletising units (31, 91, 111, 131) and
- a palletising station comprising a palletising robot (80), wherein the at least one self-sufficient transport vehicle (79, 100, 120) is set up to move automatically to the palletising station, after the at least one self-sufficient transport vehicle (70, 100, 120) has been loaded with all of the palletising units (31, 91, 111, 131) required for the mixed pallet (30, 90, 110, 130), and the palletising robot (80) is set up to unload the palletising units (31, 91, 111, 131) from the at least one self-sufficient transport vehicle (30, 100, 120) according to the packing pattern and to place them according to the packing pattern onto the transport pallet (32) to form the mixed pallet (30, 90, 110, 130).

8. Device according to claim 7, the loading device of which comprises a separating robot (16).

9. Device according to claim 1 or 8, the goods holding out device (1) of which comprises at least one commissioning alley (15), along which the loading device (16) and the at least one self-sufficient transport vehicle (70, 100, 120) can be moved for loading with the palletising units (31, 91, 111, 131).

10. Device according to one of claims 7 to 9, the storage management system of which stores the positions and orientations of the palletising units (31, 91, 111, 131) in at least one self-sufficient transport vehicle (71, 101, 121).

11. Device according to one of claims 7 to 10, the storage management system of which transmits loading datasets assigned to the order (A) to the at least one self-sufficient transport vehicle (70, 100, 120), so that the at least one self-sufficient transport vehicle (70, 100, 120) initiates a movement of the palletising robot (80) and/or a movement of the loading device (16).

12. Storage management system which is set up:
- on the basis of an order (A) to supply palletising units (31, 91, 111, 131) to create a packing pattern and a palletising sequence of the palletising units (31, 91, 111, 131) for a mixed pallet (30, 90, 110, 130) comprising a transport pallet (32),
- on the basis of the palletising units (31, 91, 111, 131) of the order (A) to move at least one self-sufficient transport vehicle (70, 100, 120) to a goods holding out device (1), in which the palletising units (31, 91, 11, 131) are held out as package layers (13),
- controlling a loading device (16) such that the latter removes the palletising units (31, 91, 111, 131) from the goods holding out device (1) and places them on the at least one self-sufficient transport vehicle (70, 100, 120),
- moving the at least one self-sufficient transport vehicle (70, 100, 120) to a palletising station, after the at least one self-sufficient transport vehicle (70, 100, 120) has been loaded with the palletising units (31, 91, 111, 131) and
- controlling a palletising robot (80) of the palletising station such that the latter unloads the at least one self-sufficient transport vehicle (70, 100, 120) on the basis of the palletising sequence and places the palletising units (31, 91, 111, 131) down on the transport pallet (32), in such a way that the mixed pallet (30, 90, 100, 130) comprises the packing pattern.

13. Storage management system according to claim 12, in which the goods holding out device comprises a high shelf (1), which comprises several shelf levels (2, 3) lying above one another with lower and upper shelf levels (2, 3), wherein package layers (13) in the lower shelf levels (3) are held out and homogenous pallets (4) assigned to the packing layers (13) are held out in the upper shelf levels (2), and the storage management system is set up in order to
- control a shelf operating device (8) of the high shelf (2), to depalletise the homogenous pallets (4) held out in the upper shelf levels (2) which each comprise several packing layers (13) and to sort the individual packing layers (13) on the basis of the depalletisation into the lower shelf levels (3), and
- to control the loading device (6) to remove the palletising units (31, 91, 111, 131) from the packing layers (13).

14. Storage management system according to claim 12 or 13, in which the loading device comprises a separating robot (16) and the storage management system is set up:
- to control a linear drive (18) arranged along a commissioning alley (15) between the high shelf (1), on which linear drive the separating robot (16) is secured, such that the separating robot (16) can remove the required palletising units (31, 91, 111, 131) from the high shelf (1) and
- to control the at least one self-sufficient transport vehicle (70, 100, 130) such that it moves next to the separating robot (16).

15. Use of at least one self-sufficient transport vehicle (70, 100, 120) for automatic loading with all of the palletising units (31, 91, 111, 131) required for commissioning a mixed pallet (30, 90, 110, 130) in any sequence, and when loaded with all of the required palletising units (31, 91, 111, 131) for holding out the palletising units (31, 91, 111, 131) for an automatic palletisation of the mixed pallet (30, 90, 110, 130) according to a palletising sequence.

## Revendications

1. Procédé de préparation de marchandises, présentant les étapes de procédé suivantes :
- chargement d'au moins un véhicule de transport (70, 100, 120) indépendant avec toutes les unités de palettisation (31, 91, 111, 131) nécessaires à la préparation d'une palette mélangée (30, 90, 110, 130),
- transport automatique dudit au moins un véhicule de transport (70, 100, 120) indépendant chargé de toutes les unités de palettisation (31, 91, 111, 131) nécessaires à la préparation d'une palette mélangée (30, 90, 110, 130) vers une station de palettisation présentant un robot de palettisation (80) ; et
- déchargement séquentiel des unités de palettisation (31, 91, 111, 131) depuis ledit au moins véhicule de transport (70, 100, 120) et placement des unités de palettisation (31, 91, 111, 131) sur une palette de transport (32) pour former la palette mélangée (30, 90, 110, 130) au moyen du robot de palettisation (80) qui décharge ledit au moins un véhicule de transport (70, 100, 120) indépendant chargé selon un modèle d'emballage déterminé auparavant de la palette mélangée (30, 90, 110, 130).

2. Procédé selon la revendication 1, présentant le chargement d'un seul véhicule de transport (70, 100, 120) indépendant avec toutes les unités de palettisation (31, 91, 111, 131) nécessaires à la préparation d'une palette mélangée (30, 90, 110, 130).

3. Procédé selon la revendication 1 ou 2, présentant la mise à disposition de couches d'emballages (13) et le prélèvement des unités de palettisation (31, 91, 111, 131) nécessaires hors des couches d'emballages mises à disposition, en particulier en mettant à disposition les couches d'emballages (13) dans un rayonnage en hauteur (1) qui présente plusieurs plans de rayonnage (2, 3) superposés avec des plans de rayonnage inférieurs et supérieurs (3, 2), les couches d'emballages (13) étant mises à disposition dans les plans de rayonnage inférieurs (2) et les palettes non mélangées (4), associées aux couches d'emballages (13), étant mises à disposition dans des plans de rayonnage supérieurs (2), et présentant en particulier en outre :
- la dépalettisation des palettes (4) non mélangées mises à disposition dans les plans de rayonnage supérieurs (2), qui présentent chacun plusieurs couches d'emballages (13), et
- le rangement des couches d'emballages (13) individuelles dans les plans de rayonnage inférieurs (3).

4. Procédé selon l'une des revendications 1 à 3, présentant en outre le chargement dudit au moins un véhicule de transport (70, 100, 120) indépendant au moyen d'un dispositif de chargement (16) automatique.

5. Procédé selon la revendication 4, dans lequel le dispositif de chargement présente un robot de séparation (16) automatique.

6. Procédé selon la revendication 5, présentant les procédés du robot de séparation et dudit au moins un véhicule de transport (70, 100, 120) indépendant pour le chargement de celui-ci avec les unités de palettisation (31, 91, 111, 131) le long d'une allée de préparation (15), le long de laquelle les unités de palettisation (31, 91, 111, 131) sont stockées.

7. Dispositif de préparation de marchandises, présentant
- un dispositif de mise à disposition de marchandises (1) dans lequel est mise à disposition une multitude d'unités de palettisation (31, 91, 111, 131) diverses,
- un système de gestion de stock qui, sur la base d'une commande (A) de préparation d'une palette mélangée (30, 90, 110, 130) présentant une palette de transport (32), détermine un modèle d'emballage pour la palette mélangée (30, 90, 110, 130),
- un dispositif de chargement (16) automatique et au moins un véhicule de transport (70, 100, 120) indépendant, le dispositif de chargement (16) étant aménagé de telle sorte que sur la base de la commande (A), toutes les unités de palettisation (31, 91, 111, 131) nécessaires à la palette mélangée (30, 90, 110, 120) sont retirées du dispositif de mise à disposition de marchandises (1) et ledit au moins un véhicule de transport (70, 100, 120) indépendant est chargé avec les unités de palettisation (31, 91, 111, 131) retirées, et
- une station de palettisation présentant un robot de palettisation (80), ledit au moins un véhicule de transport (70, 100, 120) indépendant étant aménagé de telle sorte qu'il va automatiquement à la station de la palettisation après que ledit au moins un véhicule de transport (70, 100, 120) indépendant soit chargé avec toutes les unités de palettisation (31, 91, 111, 131) nécessaires à la palette mélangée (30, 90, 110, 130), et le robot de palettisation (80) est aménagé de telle sorte que les unités de palettisation (31, 91, 111, 131) sont déchargées par ledit au moins un véhicule de transport (70, 100, 120) indépendant selon le modèle d'emballage et sont placées sur la palette de transport (32) selon le modèle d'emballage pour former la palette mélangée (30, 90, 110, 130).

8. Dispositif selon la revendication 7, dont le dispositif de chargement présente un robot de séparation (16).

9. Dispositif selon la revendication 1 ou 8, dont le dispositif de mise à disposition de marchandises (1) présente au moins une allée de préparation (15) le long de laquelle le dispositif de chargement (16) et ledit au moins un véhicule de transport (70, 100, 120) indépendant peuvent être déplacés avec les unités de palettisation (31, 91, 111, 131) pour charger ce dernier.

10. Dispositif selon l'une des revendications 7 à 9, dont le système de gestion de stockage mémorise les positions et les orientations des unités de palettisation (31, 91, 111, 131) dans ledit au moins un véhicule de transport (70, 100, 120) indépendant.

11. Dispositif selon l'une des revendications 7 à 10, dont le système de gestion de stockage délivre audit au moins un véhicule de transport (70, 100, 120) indépendant les jeux de données de chargement associés à la commande (A), de telle sorte que ledit au moins un véhicule de transport (70, 100, 120) indépendant déclenche un mouvement du robot de palettisation (80) et/ou un mouvement du dispositif de chargement (16).

12. Système de gestion de stockage qui est aménagé de manière à :
- établir, sur la base d'une commande (A) pour la livraison d'unités de palettisation (31, 91, 111, 131), un modèle d'emballage et une succession de palettisation des unités de palettisation (31, 91, 111, 131) pour une palette mélangée (30, 90, 110, 130) présentant une palette de transport (32),
- déplacer, sur la base des unités de palettisation (31, 91, 111, 131 ) de la commande (A) au moins un véhicule de transport (70, 100, 120) indépendant vers un dispositif de mise à disposition de marchandises (1) dans lequel les unités de palettisation (31, 91, 111, 131) sont mises à disposition sous forme de couches d'emballages (13),
- piloter un dispositif de chargement (16) de telle sorte que celui-ci retire les unités de palettisation (31, 91, 111, 131) du dispositif de mise à disposition de marchandises (1) et les pose sur ledit au moins un véhicule de transport (70, 100, 120) indépendant,
- déplacer ledit au moins un véhicule de transport (70, 100, 120) indépendant vers une station de palettisation après que ledit au moins un véhicule de transport (70, 100, 120) indépendant soit chargé avec les unités de palettisation (31, 91, 111, 131), et
- piloter un robot de palettisation (80) de la station de palettisation de telle sorte que celui-ci décharge ledit au moins un véhicule de transport (70, 100, 120) indépendant selon la succession de palettisation et dépose les unités de palettisation (31, 91, 111, 131) de telle sorte sur la palette de transport (32) que la palette mélangée (30, 90, 100, 130) présente le modèle d'emballage.

13. Système de gestion de stockage selon la revendication 12, dans lequel le dispositif de mise à disposition comprend un rayonnage en hauteur (1) qui présente plusieurs plans de rayonnage (2, 3) superposés avec des plans de rayonnage inférieurs et supérieurs (3, 2), des couches d'emballages (13) étant mises à disposition dans les plans de rayonnage inférieurs (3) et des palettes non mélangées (4), associées aux couches d'emballages (13), étant mises à disposition dans les plans de rayonnage supérieurs (2), et le système de gestion de stockage étant aménagé de manière à
- piloter un gerbeur (8) du rayonnage en hauteur (1), à dépalettiser les palettes non mélangées (4) mises à disposition dans les plans de rayonnage supérieurs (2), lesquelles présentent plusieurs couches d'emballages (13), et à trier les couches d'emballages (13) individuelles dans les plans de rayonnage inférieurs (3) en raison de la dépalettisation, et
- piloter le dispositif de chargement (6) de manière à retirer les unités de palettisation (31, 91, 111, 131) hors des couches d'emballages (13).

14. Système de gestion de stockage selon la revendication 12 ou 13, dans lequel le dispositif de chargement présente un robot de séparation (16) et le système de gestion de stockage est aménagé de manière à
- piloter un entraînement linéaire (18) agencé le long d'une allée de préparation (15) entre le rayonnage en hauteur (1), sur lequel est fixé le robot de séparation (16), de telle sorte que le robot de séparation (16) puisse retirer les unités de palettisation (31, 91, 111, 131) nécessaires hors du rayonnage en hauteur (1), et
- piloter ledit au moins un véhicule de transport (70, 100, 120) indépendant de telle sorte qu'il se déplace à côté du robot de séparation (16).

15. Utilisation d'au moins un véhicule de transport (70, 100, 120) indépendant pour un chargement automatisé avec toutes les unités de palettisation (31, 91, 111, 131) nécessaires à la préparation d'une palette mélangée (30, 90, 110, 130) dans une succession quelconque et, lorsqu'il est chargé de toutes les unités de palettisation (31, 91, 111, 131) nécessaires, pour mettre à disposition des unités de palettisation (31, 91, 111, 131) pour une palettisation automatisée de la palette mélangée (30, 90, 110, 130) selon une succession de palettisation.
